# EUROPEAN PATENT APPLICATION

(11) **EP 4 803 482 A1**
(43) Date of publication of application: **09.09.2026**
(21) Application number: 23958732.2
(22) Date of filing: 11.12.2023
(51) Int. Cl.: C01B 25/45, C01B 32/05, H01M 4/36, H01M 4/58, H01M 4/583, H01M 4/136, H01M 10/0525

(54) **PRECURSOR, PREPARATION METHOD THEREFOR, POSITIVE ELECTRODE MATERIAL, POSITIVE ELECTRODE SHEET AND LITHIUM ION BATTERY**

(30) Priority: 15.11.2023 CN 202311538600
(71) Applicant: Eve Power Co., Ltd., Jingmen, Hubei 448000 (CN)
(72) Inventor: WEN, Shengyao, Jingmen, Hubei 448000 (CN); WU, Tingting, Jingmen, Hubei 448000 (CN); GAO, Jianhang, Jingmen, Hubei 448000 (CN); LIU, Fanfen, Jingmen, Hubei 448000 (CN); YUAN, Dingding, Jingmen, Hubei 448000 (CN)
(74) Representative: Berggren Oy
(86) International application number: PCT/CN2023/137863
(87) International publication number: WO 2025/102463

(57) **Abstract**

The present application provides a precursor and a preparation method thereof, a positive electrode material, a positive electrode plate, and a lithium-ion battery. The preparation method includes: mixing a plurality of first raw material components, and drying to obtain a first precursor MnₓFe_{y}M_{z}PO₄·nH₂O, wherein the plurality of first raw material components include an iron source, a manganese source, a phosphorus source, an M source, and hydrogen peroxide. M represents a metal element, x is 0.10-0.95, y is 0.10-0.95, z is 0.01-0.10, the sum of x, y, and z is 0.95-1.06, and n is any integer from 0 to 10.

## Description

This application claims priority to and the benefit of Chinese Patent Application No. 202311538600.9, filed on Nov. 15, 2023, the disclosure of which is incorporated herein by reference in its entirety.

### TECHNICAL FIELD

This application relates to the field of electrode materials, and in particular, to a precursor and a preparation method thereof, a positive electrode material, a positive electrode plate, and a lithium-ion battery.

### BACKGROUND

The positive electrode material has a significant influence on the performance of lithium-ion batteries and is an important factor restricting the improvement of battery performance. Lithium manganese iron phosphate is a new generation positive electrode material for lithium-ion batteries. It exhibits a stable structure during charge and discharge, and has a relatively high operating voltage, a relatively high energy density, and good safety.

In the related art, the performance of lithium manganese iron phosphate materials is affected by their synthesis routes, and there are problems such as poor cycling performance and low specific energy, which adversely affect the application of the materials.

### TECHNICAL PROBLEM

The present application provides a precursor and a preparation method thereof, a positive electrode material, a positive electrode plate, and a lithium-ion battery to solve the above technical problems.

### TECHNICAL SOLUTIONS

In a first aspect, some embodiments of the present application provide a method for preparing a precursor, including the following steps:
providing a plurality of first raw material components, the plurality of first raw material components including an iron source, a manganese source, a phosphorus source, an M source, and hydrogen peroxide; mixing the plurality of first raw material components, and drying to obtain a first precursor, the first precursor having a general formula of MnₓFe_{y}M_{z}PO₄·nH₂O;
where M represents a metal element, x is 0.10-0.95, y is 0.10-0.95, z is 0.01-0.10, the sum of x, y, and z is 0.95-1.06, and n is any integer from 0 to 10.

In a second aspect, some embodiments of the present application provide a precursor, which includes any one of a first precursor, a second precursor, and a third precursor:
the first precursor has a general formula of MnₓFe_{y}M_{z}PO₄·nH₂O;
the second precursor includes a core having a general formula of MnₓFe_{y}M_{z}PO₄;
the third precursor includes an inner core and a carbon coating layer coated on an outer surface of the inner core, and the inner core includes a material having a general formula of LiₐMnₓFe_{y}M_{z}PO₄;
where M represents a metal element, x is 0.10-0.95, y is 0.10-0.95, z is 0.01-0.10, the sum of x, y, and z is 0.95-1.06, and n is any integer from 0 to 10.

In a third aspect, some embodiments of the present application provide a positive electrode material, which is prepared from a precursor. The precursor includes the precursor prepared by the preparation method described above, or the precursor described above.

In a fourth aspect, some embodiments of the present application provide a positive electrode plate, which includes a positive electrode current collector and a coating layer disposed on a side of the positive electrode current collector. The coating layer includes the positive electrode material described above.

In a fifth aspect, some embodiments of the present application provide a lithium-ion battery, which includes the positive electrode plate described above.

### BENEFICIAL EFFECTS

The present application has the following beneficial effects:

In the embodiments of the present application, a precursor for preparing a lithium manganese iron phosphate material is provided. By optimizing the elemental ratio of the precursor, the characteristics of the lithium manganese iron phosphate material can be better regulated, thereby improving the technical problems of low specific energy and poor cycling performance of lithium manganese iron phosphate.

### BRIEF DESCRIPTION OF THE DRAWINGS

FIG. 1 is a schematic flow diagram of a method for preparing a precursor according to an embodiment of the present application.
FIG. 2 is a schematic flow diagram of a method for preparing a precursor according to another embodiment of the present application.
FIG. 3 is a schematic flow diagram of a method for preparing a precursor according to yet another embodiment of the present application.
FIG. 4 is a schematic structural diagram of a lithium-ion battery according to an embodiment of the present application.
FIG. 5 is a schematic structural diagram of a cell pack in FIG. 4.
FIG. 6 is a schematic structural diagram of a positive electrode plate in FIG. 5.

Description of reference numerals: 100, positive electrode plate; 10, positive electrode current collector; 20, coating layer; 200, lithium-ion battery; 1, housing; 11, case; 12, cover; 2, cell pack; 3, negative electrode plate; 4, separator; 51, positive tab; 52, positive pole; 53, first connecting piece; 61, negative tab; 62, negative pole; 63, second connecting piece.

### DETAILED DESCRIPTION

Unless otherwise defined, all professional and scientific terms used herein have the same meanings as those familiar to those skilled in the art, and the materials or reagents used in the examples and comparative examples of the present application are commercially available. In addition, any methods and materials similar or equivalent to those described can be applied in the present application. The preferred implementation methods and materials described herein are for illustrative purposes only and are not intended to limit the content of the present application.

It should be noted that the described order of the following examples is not intended to limit the preferred order of the examples. The various embodiments of the present application may exist in the form of a range; it should be understood that the description in the form of a range is merely for convenience and brevity and should not be construed as a rigid limitation on the scope of the present application; therefore, it should be considered that the description of the range has specifically disclosed all possible sub-ranges and individual values within that range. For example, a range from 1 to 6 should be considered to have specifically disclosed sub-ranges such as from 1 to 3, from 1 to 4, from 1 to 5, from 2 to 4, from 2 to 6, from 3 to 6, etc., as well as individual numbers within the recited range, such as 1, 2, 3, 4, 5, and 6, regardless of the range to which it applies. In addition, whenever a numerical range is indicated herein, it is intended to include any referenced number (fraction or integer) within the indicated range.

In the description of the present application, the term "comprising" means "including but not limited to".

The terms "a plurality of", "multiple", "multiple times", or similar expressions refer to two or more (times), for example, may be two, three, four, five, six, etc.

The term "and/or" encompasses any one of two or more related listed items, as well as any and all combinations of the related listed items. The any and all combinations include any two related listed items, any more related listed items, or a combination of all related listed items. For example, "A and/or B" includes three parallel scenarios: A alone, B alone, and A+B. As another example, in the technical solution of "A, and/or B, and/or C, and/or D", it includes any single one of A, B, C, D (i.e., a technical solution connected by "logical OR"), also includes any and all combinations of A, B, C, D, i.e., includes any two or any three of A, B, C, D, and also includes the combination of all four of A, B, C, D (i.e., a technical solution connected by "logical AND").

The term "solid content" refers to the proportion of the mass of solids in the slurry to the total mass of the slurry.

Embodiments of the present application provide a precursor and a method for preparing the same. The precursor may be a first precursor MnₓFe_{y}M_{z}PO₄·nH₂O; alternatively, the precursor may be a second precursor, which includes a core having a general formula of MnₓFe_{y}M_{z}PO₄; alternatively, the precursor may be a third precursor, which includes an inner core and a carbon coating layer coated on an outer surface of the inner core, wherein the inner core includes a material having a general formula of LiₐMnₓFe_{y}M_{z}PO₄. Any of the above precursors can be used for preparing a lithium manganese iron phosphate positive electrode material.

In the precursor, Mn and Fe elements uniformly form a solid solution, thereby effectively avoiding element segregation, and the proportions of the respective elements in the precursor are optimized to fall within a preferable range. By using the precursor, characteristics of the lithium manganese iron phosphate positive electrode material can be better regulated, so that a positive electrode material having a stable structure, smooth ion channels, relatively high specific energy and long cycle life is prepared. The positive electrode material includes an inner core and a carbon coating layer coated on an outer surface of the inner core, and the inner core has the following general formula: LiₐMnₓFe_{y}M_{z}PO₄. Specific features of the positive electrode material will be described in detail hereinafter and will not be repeated here.

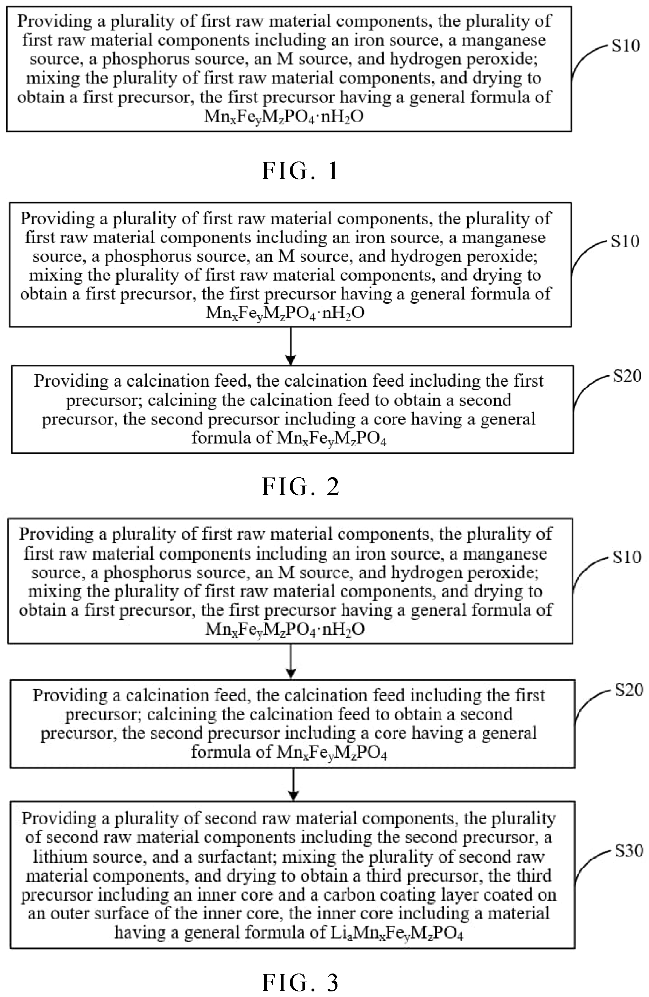

As shown in FIG. 1, some embodiments of the present application provide a method for preparing a first precursor, and the method includes the following steps:
Step S10: providing a plurality of first raw material components, the plurality of first raw material components including an iron source, a manganese source, a phosphorus source, an M source, and hydrogen peroxide; mixing the plurality of first raw material components, and drying to obtain a first precursor, wherein the first precursor has a general formula of MnₓFe_{y}M_{z}PO₄·nH₂O.

As shown in FIG. 2, some embodiments of the present application provide a method for preparing a second precursor, and the method includes the following steps:

Step S10: providing a plurality of first raw material components, the plurality of first raw material components including an iron source, a manganese source, a phosphorus source, an M source, and hydrogen peroxide; mixing the plurality of first raw material components, and drying to obtain a first precursor, wherein the first precursor has a general formula of MnₓFe_{y}M_{z}PO₄·nH₂O.

Step S20: providing a calcination feed, the calcination feed including the first precursor; calcining the calcination feed to obtain a second precursor, wherein the second precursor includes a core having a general formula of MnₓFe_{y}M_{z}PO₄.

As shown in FIG. 3, some embodiments of the present application provide a method for preparing a third precursor, and the method includes the following steps:

Step S10: providing a plurality of first raw material components, the plurality of first raw material components including an iron source, a manganese source, a phosphorus source, an M source, and hydrogen peroxide; mixing the plurality of first raw material components, and drying to obtain a first precursor, wherein the first precursor has a general formula of MnₓFe_{y}M_{z}PO₄·nH₂O.

Step S20: providing a calcination feed, the calcination feed including the first precursor; calcining the calcination feed to obtain a second precursor, wherein the second precursor includes a core having a general formula of MnₓFe_{y}M_{z}PO₄.

S30: providing a plurality of second raw material components, the plurality of second raw material components including the second precursor, a lithium source, and a surfactant; mixing the plurality of second raw material components, and drying to obtain a third precursor, wherein the third precursor includes an inner core and a carbon coating layer coated on an outer surface of the inner core, and the inner core includes a material having a general formula of LiₐMnₓFe_{y}M_{z}PO₄.

Based on step 10, a first precursor can be prepared, and the first precursor has a general formula of MnₓFe_{y}M_{z}PO₄·nH₂O. In the general formula, x is 0.10-0.95, for example, 0.10, 0.12, 0.15, 0.2, 0.3, 0.4, 0.5, 0.6, 0.7, 0.8, 0.9, 0.91, 0.93, 0.95, or a value between any two of the foregoing values; y is 0.10-0.95, for example, 0.10, 0.12, 0.15, 0.2, 0.3, 0.4, 0.5, 0.6, 0.7, 0.8, 0.9, 0.91, 0.93, 0.95, or a value between any two of the foregoing values; and z is 0.01-0.10, for example, 0.01, 0.02, 0.03, 0.04, 0.05, 0.06, 0.07, 0.08, 0.09, 0.10, or a value between any two of the foregoing values. Further, in some embodiments, the sum of x, y, and z is greater than or equal to 0.95 and less than or equal to 1.06; for example, the sum of x, y, and z may be 0.95, 0.96, 0.97, 0.98, 0.99, 1.00, 1.01, 1.02, 1.03, 1.04, 1.05, 1.06, or a value between any two of the foregoing values. n is any integer from 0 to 10, for example, 0, 1, 2, 3, 4, 5, 6, 7, 8, 9, or 10.

Further, in some embodiments, x is 0.40-0.70. When the molar proportion of Mn is precisely controlled to fall within the above range, it is beneficial for balancing the specific energy and cycle performance of the lithium manganese iron phosphate positive electrode material, so as to obtain a positive electrode material having both high specific energy and high cycle performance. Still further, x is 0.50-0.60; within this range, the specific capacity and cycle performance can be further improved.

Further, in some embodiments, y is 0.30-0.60. When the molar proportion of Fe is precisely controlled to fall within the above range, it is beneficial for balancing the specific energy and cycle performance of the lithium manganese iron phosphate positive electrode material, so as to obtain a positive electrode material having both high specific energy and high cycle performance. Still further, y is 0.50-0.60, which helps to further improve the cycle performance.

In some embodiments, when the ratio of x to y is 0.9-1.1, the cycle performance can be further improved.

Further, in some embodiments, z is 0.05-0.10. When the molar proportion of M is precisely controlled to fall within the above range, it is beneficial for balancing the specific energy and cycle performance of the lithium manganese iron phosphate positive electrode material, so as to obtain a positive electrode material having both high specific energy and high cycle performance. Still further, z is 0.05-0.07; within this range, the specific energy and cycle performance can be further improved.

In some embodiments, the sum of x, y, and z is 0.96-0.99. When the molar proportions of the respective elements are precisely controlled to satisfy the above condition, it is beneficial for balancing the specific energy and cycle performance of the lithium manganese iron phosphate positive electrode material, so as to obtain a positive electrode material having both high specific energy and high cycle performance.

In some embodiments, n is 0, 1, or 2.

M represents a doping metal element. By doping the metal element M, the diffusion channels of lithium ions in the positive electrode material can be improved, thereby increasing the electrical conductivity of the positive electrode material. In addition, the doping metal element M can form a more stable lattice framework with oxygen, thereby enhancing structural stability and contributing to improved rate performance, cycle stability, and energy density. In some embodiments, the element M includes, but is not limited to, one or more elements selected from the group consisting of magnesium, calcium, strontium, cobalt, titanium, zirconium, molybdenum, vanadium, niobium, nickel, scandium, chromium, copper, zinc, beryllium, lanthanum, and aluminum. It can be understood that M may be a single element, or may be two, three, or more elements. Among the metal elements included in M, the phosphates of some of the metal elements have an olivine structure. For example, when M is nickel or cobalt, or when M consists of nickel and cobalt, the phosphates of M, together with manganese phosphate or iron phosphate, are configured in an olivine structure, thereby forming a multi-olivine-type positive electrode material. The charge-discharge curves and cycling performance curves of the multi-olivine-type positive electrode material can be regarded as a linear superposition of the charge-discharge curves and cycling performance curves of the olivine structures formed by the phosphates of each metal element, thereby effectively improving the cycling performance of the positive electrode material.

Returning to step S10:
The iron source refers to a raw material compound used to provide an iron element, and may be any compound containing iron that is commonly used in the preparation of positive electrode materials in the art. For example, it may include, but is not limited to, one or more selected from the group consisting of iron powder, inorganic iron salts, and organic iron salts. The inorganic iron salts include one or more selected from the group consisting of ferrous sulfate, iron phosphate, ferric hydrogen phosphate, and ferric dihydrogen phosphate. The organic iron salts include one or more selected from the group consisting of ferric acetate, ferrous oxalate, ferrous tartrate, ferrous lactate, and ferrous formate.

The manganese source refers to a raw material compound used to provide a manganese element, and may be any compound containing manganese that is commonly used in the preparation of positive electrode materials in the art. For example, it may include, but is not limited to, one or more selected from the group consisting of inorganic manganese salts and organic manganese salts. The inorganic manganese salts include one or more selected from the group consisting of manganese sulfate, manganese carbonate, manganese nitrate, manganese phosphate, and manganese hydrogen phosphate. The organic manganese salts include one or both of manganese acetate and manganese oxalate.

The M source refers to a raw material compound used to provide the element M, and may be any compound containing the element M that is commonly used in the preparation of positive electrode materials in the art. For example, it may include, but is not limited to, one or more selected from the group consisting of organic M salts and inorganic M salts. The organic M salts include one or more selected from the group consisting of formates of the element M, acetates of the element M, hydroxyacetates of the element M, lactates of the element M, tartrates of the element M, and oxalates of the element M. The inorganic M salts include at least one selected from the group consisting of phosphates of the element M, hydrogen phosphates of the element M, dihydrogen phosphates of the element M, carbonates of the element M, oxides of the element M, hydroxides of the element M, fluorides of the element M, chlorides of the element M, nitrates of the element M, sulfates of the element M, and bromides of the element M. The element M includes one or more selected from the group consisting of magnesium, calcium, strontium, cobalt, titanium, zirconium, molybdenum, vanadium, niobium, nickel, scandium, chromium, copper, zinc, beryllium, lanthanum, and aluminum. It can be understood that the M source may include one metal element, or may include two or more metal elements.

The phosphorus source refers to a raw material compound used to provide a phosphorus element, and includes, but is not limited to, one or both of phosphoric acid and ammonium dihydrogen phosphate. It can be understood that, in some embodiments, when the iron source, manganese source, M source, or other compounds used among the plurality of first raw material components also contain a phosphorus element, such compounds may likewise serve as the phosphorus source.

The iron source, manganese source, phosphorus source, M source, and hydrogen peroxide are brought into full contact by mixing to form a mixed phase
In order to prepare a first precursor having a preferable elemental ratio, in some embodiments, the molar ratio of manganese in the manganese source, iron in the iron source, M in the M source, and phosphorus in the phosphorus source is (0.10-0.95):(0.10-0.95):(0.01-0.10):1. In this way, the molar ratio of each element in the first precursor can be regulated, and MnₓFe_{y}M_{z}PO₄·nH₂O can be obtained.

In some embodiments, the molar ratio of hydrogen peroxide to iron in the iron source is (2-3):1, for example, 2:1, 2.1:1, 2.2:1, 2.3:1, 2.4:1, 2.5:1, 2.6:1, 2.7:1, 2.8:1, 2.9:1, 3:1, or a value between any two of the foregoing values.

In some embodiments, the plurality of first raw material components further include a complexing agent, and the complexing agent includes one or more selected from the group consisting of 1-hydroxyethylidene-1,1-diphosphonic acid (HEDP), aminotris(methylene phosphonic acid) (ATMP), and diethylenetriaminepentaacetic acid (DTPA). The complexing agent accounts for 0.1-1% by mass of the iron source, for example, 0.1%, 0.2%, 0.3%, 0.4%, 0.5%, 0.6%, 0.7, 0.8%, 0.9%, 1%, or a value between any two of the foregoing values.

In some embodiments, the step of mixing the plurality of first raw material components and drying to obtain the first precursor includes: mixing the plurality of first raw material components, heating at a temperature of 60-95°C, then filtering the reaction product, and drying the solid phase at 100-150°C to obtain the first precursor.

The second precursor may be obtained by calcining the first precursor. The second precursor includes a core having a general formula of MnₓFe_{y}M_{z}PO₄, wherein M represents a metal element including, but not limited to, one or more selected from the group consisting of magnesium, calcium, strontium, cobalt, titanium, zirconium, molybdenum, vanadium, niobium, nickel, scandium, chromium, copper, zinc, beryllium, lanthanum, and aluminum; x is 0.10-0.95, y is 0.10-0.95, z is 0.01-0.10, and the sum of x, y, and z is 0.95-1.06.

The second precursor may be a precursor material without a carbon layer. Specifically, the second precursor is a material having the general formula of MnₓFe_{y}M_{z}PO₄, and the carbon content in the second precursor is 0. The second precursor may also be a precursor material having a carbon layer. Specifically, the second precursor includes a core and a carbon layer coated on the surface of the core, the core including a material having a general formula of MnₓFe_{y}M_{z}PO₄. In the second precursor, the mass percentage of the carbon layer, based on the mass of the second precursor, is less than or equal to 5%. For example, it may be a value greater than 0 and less than 0.01%, 0.01%, 0.05%, 0.1%, 0.5%, 1%, 1.5%, 2%, 2.5%, 3%, 4%, 5%, or a value between any two of the foregoing values. By providing a carbon layer to the outer surface of the core and controlling its mass content within the above range, on the one hand, a protective effect can be achieved during the preparation of the positive electrode material, which helps prevent excessive oxidation of the material, reduces side reactions, and improves the purity of the product; on the other hand, it can also effectively regulate the crystal growth rate and reaction uniformity, so that the crystal grows uniformly in all regions and agglomeration or adhesion of crystal particles is suppressed, thereby facilitating the obtainment of a product with more uniform particle size, higher ionic conductivity, and more stable performance. In addition, using the positive electrode material prepared from the second precursor to fabricate a battery helps improve the conductivity of the battery. It can be understood that the carbon layer refers to carbon coated on the outer surface of the core, which may be a continuous film completely coating the core, or a discontinuous film coating only part of the surface of the core.

In step S20:
In some embodiments, the calcination temperature may be 550-750°C, for example, 550°C, 560°C, 580°C, 600°C, 620°C, 650°C, 670°C, 690°C, 700°C, 710°C, 730°C, 750°C, or a value between any two of the foregoing values.

In some embodiments, the second precursor has a carbon layer. In order to form the carbon layer, a compound providing a carbon element is required. In the present application, the compound serving as the source of carbon of the carbon layer in the second precursor is referred to as a first carbon source. The first carbon source includes one or more selected from the group consisting of organic metal salts, organic carbon sources, and inorganic carbon sources. The organic metal salts includes one or more selected from the group consisting of organic iron salts, organic manganese salts, and organic M sources. The organic carbon sources include one or more selected from the group consisting of glucose, sucrose, lactose, starch, organic acids, vitamins, polyvinylpyrrolidone (PVP), polyethylene glycol (PEG), 1-hydroxyethylidene-1,1-diphosphonic acid, aminotris(methylene phosphonic acid), diethylenetriaminepentaacetic acid, and phenolic resin. The inorganic carbon sources include one or more selected from the group consisting of graphene, carbon nanotubes, and graphite. Among them, the organic metal salt is composed of metal cations and organic anions. Since the organic anions contain carbon elements, they can also form a carbon layer during calcination under an inert gas atmosphere, and therefore can be used as a carbon source.

Specifically, step S20 may be implemented according to the following procedure: a calcination feed is provided, and the calcination feed is calcined under the protection of an inert gas to obtain the second precursor. The inert gas includes one or more selected from the group consisting of nitrogen, argon, and helium.

The first carbon source can be additionally added in step S20, or may be introduced in step S10 when serving as an iron source, a manganese source, or an M source.

When the plurality of first raw material components for preparing the first precursor do not contain an organic anion, i.e., the plurality of first raw material components include iron powder or an inorganic iron salt, an inorganic manganese salt, and an inorganic M salt, the calcination feed in step S20 may further include the first carbon source, and the addition amount of the first carbon source satisfies that: the mass percentage of carbon element contained in the first carbon source, based on the total mass of the calcination feed, is greater than 0 and less than or equal to 25%. For example, it may be a value less than 0.001%, 0.001%, 0.1%, 1%, 2%, 3%, 4%, 5%, 6%, 10%, 15%, 20%, 25%, or a value between any two of the foregoing values.

When the plurality of first raw material components for preparing the first precursor contain an organic anion, i.e., the plurality of first raw material components include one or more of an organic iron salt, an organic manganese salt, and an organic M salt, an additional carbon source may be doped during the calcination in step S20, or no additional carbon source may be doped.

In practical applications, regardless of whether an additional carbon source is doped, the feeding amount of the raw materials needs to satisfy that: the mass percentage of carbon contained in the first carbon source, based on the total mass of the calcination feed, is greater than 0 and less than or equal to 25%. The mass of carbon contained in the first carbon source refers to the sum of the mass of carbon contained in the plurality of first raw material components and the mass of carbon contained in any additionally added carbon source.

The third precursor may be prepared from the second precursor. The third precursor includes an inner core and a carbon coating layer coated on an outer surface of the inner core. The inner core includes a material having a general formula of LiₐMnₓFe_{y}M_{z}PO₄, wherein M represents a metal element, including but not limited to one or more elements selected from the group consisting of magnesium, calcium, strontium, cobalt, titanium, zirconium, molybdenum, vanadium, niobium, nickel, scandium, chromium, copper, zinc, beryllium, lanthanum, and aluminum; a is 0.95-1.10, x is 0.10-0.95, y is 0.10-0.95, z is 0.01-0.10, and the sum of x, y, and z is 0.95-1.06. It can be understood that the carbon coating layer refers to a carbon layer coated on the outer surface of the inner core, which may be a continuous film completely coating the inner core, or a discontinuous film coating only part of the surface of the inner core. During the process of mixing the second precursor with a lithium source, the lithium source is brought into full contact with the second precursor and gradually enters the inner core to form a mixed phase, thereby obtaining the third precursor.

The carbon coating layer accounts for 1%-5% by mass of the third precursor. For example, it may be 1%, 1.5%, 2%, 2.5%, 3%, 3.5%, 4%, 4.5%, 5%, or a value between any two of the foregoing values.

In step S30:
The lithium source includes, but is not limited to, one or more selected from the group consisting of lithium oxides, lithium hydroxide, organic lithium salts, and inorganic lithium salts. The lithium oxides include, but are not limited to, Li₂O. The inorganic lithium salts include, but are not limited to, one or more selected from the group consisting of lithium carbonate, lithium sulfate, lithium nitrate, lithium dihydrogen phosphate, and lithium phosphate. The organic lithium salts include, but are not limited to, one or both of lithium acetate and lithium oxalate.

The surfactant includes, but is not limited to, one or both of polyethylene glycol (PEG) and aminotris(methylene phosphonic acid) (ATMP).

In some embodiments, the molar ratio of lithium in the lithium source to iron in the iron source is (0.95-1.10):(0.10-0.95).

In some embodiments, the surfactant accounts for 1-5% by mass of the iron source. For example, it may be 1%, 1.5%, 2%, 2.5%, 3%, 3.5%, 4%, 4.5%, 5%, or a value between any two of the foregoing values.

In some embodiments, the plurality of second raw material components further includes a phosphorus source. By adding the phosphorus source again, an excess of the phosphorus source is ensured, thereby promoting a complete reaction.

The third precursor has a carbon coating layer. The carbon of the carbon coating layer may be introduced during the preparation of the second precursor, or may be introduced through a newly added carbon source. In the present application, the carbon source newly introduced during the preparation of the third precursor is referred to as a second carbon source. The second carbon source includes, but is not limited to, one or more selected from the group consisting of organic metal salts, organic carbon sources, and inorganic carbon sources. The organic metal salts include one or more selected from the group consisting of organic iron salts, organic manganese salts, organic M sources, and organic lithium sources. The organic carbon sources include one or more selected from the group consisting of glucose, sucrose, lactose, starch, organic acids, vitamins, polyvinylpyrrolidone, polyethylene glycol, 1-hydroxyethylidene-1,1-diphosphonic acid, aminotris(methylene phosphonic acid), diethylenetriaminepentaacetic acid, and phenolic resin. The inorganic carbon sources include one or more selected from the group consisting of graphene, carbon nanotubes, and graphite.

When the mass percentage of carbon contained in the second precursor is 0, the plurality of second raw material components further includes a second carbon source, and the mass percentage of carbon in the plurality of second carbon sources, based on the total mass of the plurality of second raw material components, is 1-25%. For example, it may be 1%, 2%, 3%, 4%, 5%, 6%, 10%, 15%, 20%, 25%, or a value between any two of the foregoing values.

When the mass percentage of carbon contained in the second precursor is greater than 0 and less than or equal to 5%, the plurality of second raw material components may include a second carbon source or may not include a second carbon source. When the second carbon source is added, the total mass percentage of carbon contained in the second precursor and carbon contained in the second carbon source, based on the total mass of the plurality of second raw material components, is 1-25%. For example, it may be 1%, 2%, 3%, 4%, 5%, 6%, 10%, 15%, 20%, 25%, or a value between any two of the foregoing values.

The present application further provides a positive electrode material, which can be prepared from the above-described precursor.

The positive electrode material includes an inner core and a carbon coating layer coated on an outer surface of the inner core. The inner core includes a material having a general formula of LiₐMnₓFe_{y}M_{z}PO₄, wherein M represents a metal element, including but not limited to one or more elements selected from the group consisting of magnesium, calcium, strontium, cobalt, titanium, zirconium, molybdenum, vanadium, niobium, nickel, scandium, chromium, copper, zinc, beryllium, lanthanum, and aluminum; a is 0.95-1.10, x is 0.10-0.95, y is 0.10-0.95, z is 0.01-0.10, and the sum of x, y, and z is 0.95-1.06. The carbon coating layer accounts for 1%-2% by mass of the positive electrode material. For example, it may be 1%, 1.1%, 1.2%, 1.3%, 1.4%, 1.5%, 1.6%, 1.7%, 1.8%, 1.9%, 2%, or a value between any two of the foregoing values. The positive electrode material has relatively high specific energy and better cycle performance.

The embodiments of the present application further provide a method for preparing a positive electrode material, and the method includes the following steps:

Step S100: providing a plurality of first raw material components, the plurality of first raw material components including an iron source, a manganese source, a phosphorus source, an M source, and hydrogen peroxide; mixing the plurality of first raw material components, and drying to obtain a first precursor.

Step S200: providing a calcination feed, the calcination feed including the first precursor; calcining the calcination feed to obtain a second precursor.

Step S300: providing a plurality of second raw material components, the plurality of second raw material components including the second precursor, a lithium source, and a surfactant; mixing the plurality of second raw material components, and drying to obtain a third precursor.

Step S400: calcining the third precursor under the protection of an inert gas to obtain the positive electrode material.

The first precursor has a general formula of MnₓFe_{y}M_{z}PO₄·nH₂O; x is 0.10-0.95, y is 0.10-0.95, z is 0.01-0.10, and the sum of x, y, and z is greater than or equal to 0.95 and less than or equal to 1.06.

The second precursor includes a core having a general formula of MnₓFe_{y}M_{z}PO₄, wherein M represents a metal element including, but not limited to, one or more selected from the group consisting of magnesium, calcium, strontium, cobalt, titanium, zirconium, molybdenum, vanadium, niobium, nickel, scandium, chromium, copper, zinc, beryllium, lanthanum, and aluminum; x is 0.10-0.95, y is 0.10-0.95, z is 0.01-0.10, and the sum of x, y, and z is 0.95-1.06. The second precursor may be a precursor material without a carbon layer or a precursor material having a carbon layer, and in the second precursor, the carbon layer accounts for ≤5% by mass of the second precursor.

The third precursor includes an inner core and a carbon coating layer coated on an outer surface of the inner core. The inner core includes a material having a general formula of LiₐMnₓFe_{y}M_{z}PO₄, wherein M represents a metal element, including but not limited to one or more elements selected from the group consisting of magnesium, calcium, strontium, cobalt, titanium, zirconium, molybdenum, vanadium, niobium, nickel, scandium, chromium, copper, zinc, beryllium, lanthanum, and aluminum; a is 0.95-1.10, x is 0.10-0.95, y is 0.10-0.95, z is 0.01-0.10, and the sum of x, y, and z is 0.95-1.06. The carbon coating layer accounts for 1%-5% by mass of the third precursor.

By hierarchically preparing precursors at different stages and precisely regulating the structures of the respective precursors, a positive electrode material having a stable structure and smooth ion channels, and exhibiting relatively high specific energy and long cycling life, can be effectively prepared.

It can be understood that, according to the required carbon content in the precursor to be prepared, an additional carbon source may be added in step S200 or step S300. Specifically, steps S100, S200, and S300 may be implemented with reference to the aforementioned steps S10, S20, and S30, and thus will not be described in detail herein.

Specifically, step S400 may include: under the protection of an inert gas, heating the third precursor at a heating rate of 2-10°C to 600-950°C, maintaining the temperature for 5-24 hours, and then cooling to room temperature under an inert atmosphere to obtain the positive electrode material.

The room temperature referred to in the present application is 20-40°C.

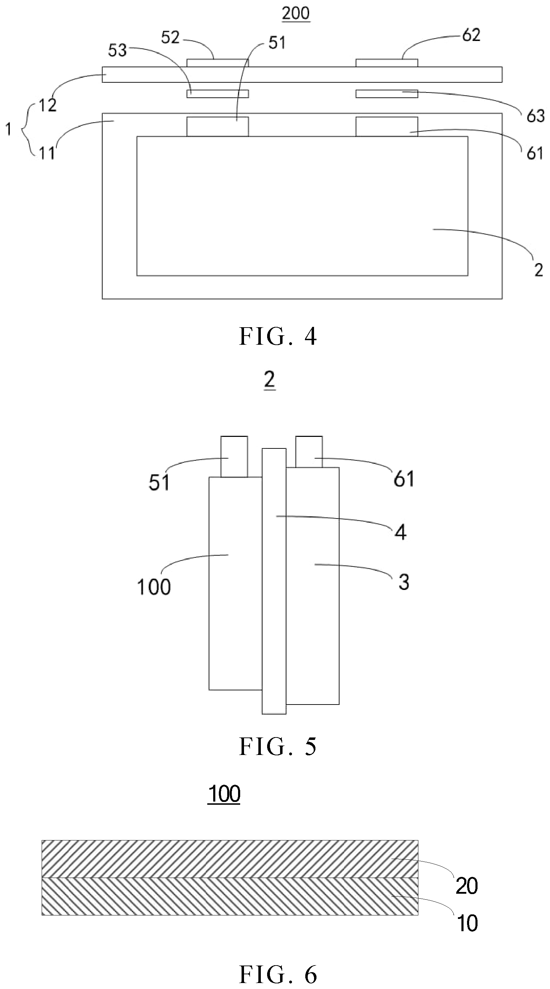

The embodiments of the present application further provide a positive electrode plate 100. As shown in FIG. 6, the positive electrode plate 100 includes a positive electrode current collector 10 and a coating layer 20 disposed on a side of the positive electrode current collector 10. The material of the coating layer 20 includes the positive electrode material according to any of the foregoing embodiments. Specifically, the material of the positive electrode current collector 10 may be any commonly used conductive metal material in the art, including but not limited to aluminum foil, platinum foil, or palladium foil, and the present application is not limited thereto.

The embodiments of the present application further provide a lithium-ion battery 100, which may include, but is not limited to, a button cell, a pouch cell, a prismatic lithium-ion battery, a cylindrical lithium-ion battery, or the like. The lithium-ion battery includes the positive electrode plate as described in any of the foregoing embodiments. Specifically, please refer to FIG. 4 and FIG. 5. In some embodiments, the lithium-ion battery 200 includes a housing 1 and a cell pack 2. The housing 1 is composed of a case 11 and a cover 12. An accommodating space is formed inside the case 11, and the cell pack 2 is mounted within the accommodating space. The cell pack 2 includes the positive electrode plate 100, a separator 4, and a negative electrode plate 3, which are sequentially stacked. In the positive electrode plate 100, the positive electrode current collector 10 is disposed adjacent to the separator 4, and the coating layer 20 is disposed on a side of the positive electrode current collector 10 facing away from the separator 4. In addition, in some embodiments, the cell pack 2 further includes a positive tab 51 connected to the positive electrode plate 100 and a negative tab 61 connected to the negative electrode plate 3. An electrolyte is filled in the cell pack 2. Furthermore, the lithium-ion battery 200 further includes a positive pole 52 and a negative pole 62 provided on the housing 1. The positive pole 52 is provided corresponding to the positive tab 51, passes through the housing 1, and is connected to the positive tab 51 via a first connecting piece 53. The negative pole 62 is provided corresponding to the negative tab 61, passes through the housing 1, and is connected to the negative tab 61 via a second connecting piece 63.

### Example 1

This example provides a lithium manganese iron phosphate material Li_{1.04}Mn_{0.55}Fe_{0.35}Mg_{0.1}PO₄@C, and the carbon content in the positive electrode material is 1.4%.

The lithium manganese iron phosphate material of this example was prepared by the following method:
Step (1): Ferric phosphate, phosphoric acid, manganese carbonate, and magnesium oxide are mixed, hydrogen peroxide and HEDP were slowly added, and then the mixture was heated at 80°C. The reaction product was then filtered, and the solid phase was dried at 120°C to obtain a first precursor Mn_{0.55}Fe_{0.35}Mg_{0.1}PO₄·nH₂O, where n is 0. The molar ratio of manganese in manganese carbonate, iron in ferric phosphate, magnesium in magnesium oxide, and phosphorus in phosphoric acid is 0.55:0.35:0.1:1. The molar ratio of hydrogen peroxide to iron in ferric phosphate is 2.5:1. The mass of HEDP added accounts for 0.5% of the mass of ferric phosphate.

Step (2): Under nitrogen protection, the first precursor was calcined at 550-750°C to obtain a second precursor Mn_{0.55}Fe_{0.35}Mg_{0.1}PO₄. The carbon content in the second precursor is 0%.

Step (3): The second precursor, sucrose, PEG, ATMP, and lithium carbonate were mixed and ground to obtain a third precursor Li_{1.04}Mn_{0.55}Fe_{0.35}Mg_{0.1}PO₄@C. The carbon content in the third precursor is 3.5%. The mass of carbon in sucrose accounts for 10% of the total mass of the second precursor, sucrose, PEG, ATMP, and lithium carbonate. The mass of carbon in PEG accounts for 2% of the total mass of the second precursor, sucrose, PEG, ATMP, and lithium carbonate. The mass ratio of lithium in lithium carbonate to iron in ferric phosphate is 1.04:0.35. The mass of ATMP added accounts for 3% of the mass of ferric phosphate.

Step (4): Under the protection of an inert gas, the third precursor was heated to 800°C at a heating rate of 8°C, kept at this temperature for 10 hours, and then cooled to room temperature under an inert atmosphere to obtain the positive electrode material Li_{1.04}Mn_{0.55}Fe_{0.35}Mg_{0.1}PO₄@C.

### Example 2

This example is substantially the same as Example 1, except that a lithium manganese iron phosphate material Li_{1.04}Mn_{0.55}Fe_{0.35}Mg_{0.1}PO₄@C is provided. The carbon content in the positive electrode material is 1.4%. In this example, scrap iron is used instead of ferric phosphate, manganese dioxide is used instead of manganese carbonate, and glucose is used instead of sucrose. Apart from these differences, the other parameters and steps remain unchanged.

### Example 3

This example is substantially the same as Example 1, except that a lithium manganese iron phosphate material Li_{1.04}Mn_{0.55}Fe_{0.35}Mg_{0.1}PO₄@C is provided. The carbon content in the positive electrode material is 1.4%. In this example, ferrous oxalate is used instead of ferric phosphate, manganese oxalate is used instead of manganese dioxide, and no hydrogen peroxide is added. Apart from these differences, the other parameters and steps remain unchanged.

### Example 4

This example is substantially the same as Example 1, except that a lithium manganese iron phosphate material Li_{1.04}Mn_{0.1}Fe_{0.75}Mg_{0.1}PO₄@C is provided. The carbon content in the positive electrode material is 1.4%. In step (1) of this example, the molar ratio of manganese in manganese carbonate to iron in ferric phosphate is changed to 0.1:0.75. Apart from these differences, the other parameters and steps remain unchanged.

### Example 5

This example is substantially the same as Example 1, except that a lithium manganese iron phosphate material Li_{1.04}Mn_{0.95}Fe_{0.1}Mg_{0.01}PO₄@C is provided. The carbon content in the positive electrode material is 1.4%. In step (1) of this example, the molar ratio of manganese in manganese carbonate, iron in ferric phosphate, and magnesium in magnesium oxide is changed to 0.95:0.1:0.01. Apart from these differences, the other parameters and steps remain unchanged.

### Example 6

This example is substantially the same as Example 1, except that a lithium manganese iron phosphate material Li_{1.04}Mn_{0.1}Fe_{0.95}Mg_{0.01}PO₄@C is provided. The carbon content in the positive electrode material is 1.4%. In step (1) of this example, the molar ratio of manganese in manganese carbonate, iron in ferric phosphate, and magnesium in magnesium oxide is changed to 0.1:0.95:0.01. Apart from these differences, the other parameters and steps remain unchanged.

### Example 7

This example is substantially the same as Example 1, except that a lithium manganese iron phosphate material Li_{1.04}Mn_{0.55}Fe_{0.4}Mg_{0.05}PO₄@C is provided. The carbon content in the positive electrode material is 1.4%. In step (1) of this example, the molar ratio of manganese in manganese carbonate, iron in ferric phosphate, and magnesium in magnesium oxide is changed to 0.55:0.4:0.05. Apart from these differences, the other parameters and steps remain unchanged.

### Example 8

This example is substantially the same as Example 1, except that a lithium manganese iron phosphate material Li_{1.04}Mn_{0.38}Fe_{0.5}Mg_{0.1}PO₄@C is provided. The carbon content in the positive electrode material is 1.4%. In step (1) of this example, the molar ratio of manganese in manganese carbonate to iron in ferric phosphate is changed to 0.38:0.5. Apart from these differences, the other parameters and steps remain unchanged.

### Example 9

This example is substantially the same as Example 1, except that a lithium manganese iron phosphate material Li_{1.04}Mn_{0.7}Fe_{0.3}Mg_{0.05}PO₄@C is provided. The carbon content in the positive electrode material is 1.4%. In step (1) of this example, the molar ratio of manganese in manganese carbonate, iron in ferric phosphate, and magnesium in magnesium oxide is changed to 0.7:0.3:0.05. Apart from these differences, the other parameters and steps remain unchanged.

### Example 10

This example is substantially the same as Example 1, except that a lithium manganese iron phosphate material Li_{1.04}Mn_{0.57}Fe_{0.3}Mg_{0.1}PO₄@C is provided. The carbon content in the positive electrode material is 1.4%. In step (1) of this example, the molar ratio of manganese in manganese carbonate to iron in ferric phosphate is changed to 0.57:0.3. Apart from these differences, the other parameters and steps remain unchanged.

### Example 11

This example is substantially the same as Example 1, except that a lithium manganese iron phosphate material Li_{1.04}Mn_{0.3}Fe_{0.58}Mg_{0.1}PO₄@C is provided. The carbon content in the positive electrode material is 1.4%. In step (1) of this example, the molar ratio of manganese in manganese carbonate to iron in ferric phosphate is changed to 0.3:0.58. Apart from these differences, the other parameters and steps remain unchanged.

### Example 12

This example is substantially the same as Example 1, except that a lithium manganese iron phosphate material Li_{1.04}Mn_{0.55}Fe_{0.39}Mg_{0.05}PO₄@C is provided. The carbon content in the positive electrode material is 1.4%. In step (1) of this example, the molar ratio of iron in ferric phosphate to magnesium in magnesium oxide is changed to 0.39:0.05. Apart from these differences, the other parameters and steps remain unchanged.

### Example 13

This example is substantially the same as Example 1, except that a lithium manganese iron phosphate material Li_{1.04}Mn_{0.5}Fe_{0.4}Mg_{0.1}PO₄@C is provided. The carbon content in the positive electrode material is 1.4%. In step (1) of this example, the molar ratio of manganese in manganese carbonate to iron in ferric phosphate is changed to 0.5:0.4. Apart from these differences, the other parameters and steps remain unchanged.

### Example 14

This example is substantially the same as Example 1, except that a lithium manganese iron phosphate material Li_{1.04}Mn_{0.55}Fe_{0.37}Mg_{0.04}PO₄@C is provided. The carbon content in the positive electrode material is 1.4%. In step (1) of this example, the molar ratio of iron in ferric phosphate to magnesium in magnesium oxide is changed to 0.37:0.04. Apart from these differences, the other parameters and steps remain unchanged.

### Example 15

This example is substantially the same as Example 1, except that a lithium manganese iron phosphate material Li_{1.04}Mn_{0.55}Fe_{0.37}Mg_{0.07}PO₄@C is provided. The carbon content in the positive electrode material is 1.4%. In step (1) of this example, the molar ratio of iron in ferric phosphate to magnesium in magnesium oxide is changed to 0.37:0.07. Apart from these differences, the other parameters and steps remain unchanged.

### Example 16

This example is substantially the same as Example 1, except that a lithium manganese iron phosphate material Li_{0.95}Mn_{0.55}Fe_{0.35}Mg_{0.1}PO₄@C is provided. The carbon content in the positive electrode material is 1.4%. In step (3) of this example, the mass ratio of lithium in lithium carbonate to iron in ferric phosphate is 0.95:0.35. Apart from these differences, the other parameters and steps remain unchanged.

### Example 17

This example is substantially the same as Example 1, except that a lithium manganese iron phosphate material Li_{1.1}Mn_{0.55}Fe_{0.35}Mg_{0.1}PO₄@C is provided. The carbon content in the positive electrode material is 1.4%. In step (3) of this example, the mass ratio of lithium in lithium carbonate to iron in ferric phosphate is 1.1:0.35. Apart from these differences, the other parameters and steps remain unchanged.

### Example 18

This example is substantially the same as Example 1, except that a lithium manganese iron phosphate material Li_{1.04}Mn_{0.55}Fe_{0.35}Co_{0.1}PO₄@C is provided. The carbon content in the positive electrode material is 1.4%. In step (1) of this example, magnesium oxide is changed to cobalt oxide. Apart from these differences, the other parameters and steps remain unchanged.

### Example 19

This example is substantially the same as Example 1, except that a lithium manganese iron phosphate material Li_{1.04}Mn_{0.55}Fe_{0.35}Ca_{0.1}PO₄@C is provided. The carbon content in the positive electrode material is 1.4%. In step (1) of this example, magnesium oxide is changed to calcium oxide. Apart from these differences, the other parameters and steps remain unchanged.

### Example 20

This example is substantially the same as Example 1, except that a lithium manganese iron phosphate material Li_{1.04}Mn_{0.55}Fe_{0.35}Sc_{0.1}PO₄@C is provided. The carbon content in the positive electrode material is 1.4%. In step (1) of this example, magnesium oxide is changed to scandium oxide. Apart from these differences, the other parameters and steps remain unchanged.

### Example 21

This example is substantially the same as Example 1, except that a lithium manganese iron phosphate material Li_{1.04}Mn_{0.55}Fe_{0.35}Cr_{0.1}PO₄@C is provided. The carbon content in the positive electrode material is 1.4%. In step (1) of this example, magnesium oxide is changed to chromium oxide. Apart from these differences, the other parameters and steps remain unchanged.

### Example 22

This example is substantially the same as Example 1, except that a lithium manganese iron phosphate material Li_{1.04}Mn_{0.55}Fe_{0.35}V_{0.1}PO₄@C is provided. The carbon content in the positive electrode material is 1.4%. In step (1) of this example, magnesium oxide is changed to vanadium oxide. Apart from these differences, the other parameters and steps remain unchanged.

### Example 23

This example is substantially the same as Example 1, except that a second precursor Mn_{0.55}Fe_{0.35}Mg_{0.1}PO₄@C, having a carbon content of 1%, and a third precursor Li_{1.04}Mn_{0.55}Fe_{0.35}Mg_{0.1}PO₄@C, having a carbon content of 3%, are provided. Accordingly, a lithium manganese iron phosphate material Li_{1.04}Mn_{0.55}Fe_{0.35}Mg_{0.1}PO₄@C can be prepared, and the carbon content in the positive electrode material is 1.4%.

In the preparation method of this example, steps (2) and (3) are modified as follows:
Step (2): Under nitrogen protection, the first precursor and PEG were calcined at 550-750 °C to obtain the second precursor Mn_{0.55}Fe_{0.35}Mg_{0.1}PO₄@C. The mass of carbon in PEG accounts for 4% of the total mass of the first precursor and PEG.

Step (3): The second precursor, sucrose, PEG, ATMP and lithium carbonate were mixed and ground to obtain the third precursor Li_{1.04}Mn_{0.55}Fe_{0.35}Mg_{0.1}PO₄@C. The mass of sucrose added accounts for 8% of the total mass of the second precursor, sucrose, PEG and ATMP. The mass of PEG added accounts for 2% of the total mass of the second precursor, sucrose, PEG and ATMP. The mass ratio of lithium in lithium carbonate to iron in ferric phosphate is 1.04:0.35. The mass of ATMP added accounts for 3% of the mass of ferric phosphate.

### Example 24

This example is substantially the same as Example 1, except that a second precursor Mn_{0.55}Fe_{0.35}Mg_{0.1}PO₄@C, having a carbon content of 5%, and a third precursor Li_{1.04}Mn_{0.55}Fe_{0.35}Mg_{0.1}PO₄@C, having a carbon content of 3%, are provided. Accordingly, a lithium manganese iron phosphate material Li_{1.04}Mn_{0.55}Fe_{0.35}Mg_{0.1}PO₄@C can be prepared, and the carbon content in the positive electrode material is 2%.

In the preparation method of this example, steps (2) and (3) are modified as follows:
Step (2): Under nitrogen protection, the first precursor and PEG were calcined at 550-750 °C to obtain the second precursor Mn_{0.55}Fe_{0.35}Mg_{0.1}PO₄@C. The mass of carbon in PEG accounts for 5% of the total mass of the first precursor and PEG.

Step (3): The second precursor, ATMP, and lithium carbonate were mixed and ground to obtain a third precursor Li_{1.04}Mn_{0.55}Fe_{0.35}Mg_{0.1}PO₄@C. The mass ratio of lithium in lithium carbonate to iron in ferric phosphate is 1.04:0.35. The mass of ATMP added accounts for 3% of the mass of ferric phosphate.

### Example 25

This example is substantially the same as Example 1, except that a second precursor Mn_{0.55}Fe_{0.35}Mg_{0.1}PO₄@C, having a carbon content of 5.5%, and a third precursor Li_{1.04}Mn_{0.55}Fe_{0.35}Mg_{0.1}PO₄@C, having a carbon content of 6%, are provided. Accordingly, a lithium manganese iron phosphate material Li_{1.04}Mn_{0.55}Fe_{0.35}Mg_{0.1}PO₄@C can be prepared, and the carbon content in the positive electrode material is 3%.

In the preparation method of this example, steps (2) and (3) are modified as follows:
Step (2): Under nitrogen protection, the first precursor and PEG were calcined at 550-750 °C to obtain the second precursor Mn_{0.55}Fe_{0.35}Mg_{0.1}PO₄@C. The mass of carbon in PEG accounts for 17% of the total mass of the first precursor and PEG.

Step (3): The second precursor, sucrose, PEG, ATMP, and lithium carbonate were mixed and ground to obtain a third precursor Li_{1.04}Mn_{0.55}Fe_{0.35}Mg_{0.1}PO₄@C. The mass of carbon in sucrose accounts for 3% of the total mass of the second precursor, sucrose, PEG, and ATMP. The mass of carbon in PEG accounts for 1% of the total mass of the second precursor, sucrose, PEG, and ATMP. The mass ratio of lithium in lithium carbonate to iron in ferric phosphate is 1.04:0.35. The mass of ATMP added accounts for 3% of the mass of ferric phosphate.

### Comparative Example 1

This comparative example provides a lithium manganese iron phosphate material Li_{1.04}Mn_{0.55}Fe_{0.35}Mg_{0.1}PO₄@C, and the carbon content in the positive electrode material is 1.4%.

The lithium manganese iron phosphate material of this comparative example was prepared by the following method:
Lithium carbonate, manganese carbonate, ferric phosphate, magnesium oxide, phosphoric acid, and graphite were mixed and ground, and then calcined under nitrogen protection, followed by cooling to room temperature under an inert atmosphere to obtain a positive electrode material.

In the mixture, the molar ratio of lithium in lithium carbonate, manganese in manganese carbonate, iron in ferric phosphate, magnesium in magnesium oxide, and phosphorus in phosphoric acid is 1.04:0.55:0.35:0.1:1. The mass of graphite accounts for 3.0% of the total mass of lithium carbonate, manganese carbonate, ferric phosphate, magnesium oxide, phosphoric acid, and graphite.

### Comparative Example 2

This comparative example is substantially the same as Comparative Example 1, except that a lithium manganese iron phosphate material Li_{1.04}Mn_{0.55}Fe_{0.35}Co_{0.1}PO₄@C is provided. The carbon content in the positive electrode material is 1.4%. In this comparative example, magnesium oxide is changed to cobalt oxide. Apart from these differences, the other parameters and steps remain unchanged.

### Comparative Example 3

This comparative example is substantially the same as Comparative Example 1, except that a lithium manganese iron phosphate material Li_{1.04}Mn_{0.55}Fe_{0.35}Ca_{0.1}PO₄@C is provided. The carbon content in the positive electrode material is 1.4%. In this comparative example, magnesium oxide is changed to calcium oxide. Apart from these differences, the other parameters and steps remain unchanged.

### Comparative Example 4

This comparative example is substantially the same as Comparative Example 1, except that a lithium manganese iron phosphate material Li_{1.04}Mn_{0.55}Fe_{0.35}Sc_{0.1}PO₄@C is provided. The carbon content in the positive electrode material is 1.4%. In this comparative example, magnesium oxide is changed to scandium oxide. Apart from these differences, the other parameters and steps remain unchanged.

### Comparative Example 5

This comparative example is substantially the same as Comparative Example 1, except that a lithium manganese iron phosphate material Li_{1.04}Mn_{0.55}Fe_{0.35}Cr_{0.1}PO₄@C is provided. The carbon content in the positive electrode material is 1.4%. In this comparative example, magnesium oxide is changed to chromium oxide. Apart from these differences, the other parameters and steps remain unchanged.

### Comparative Example 6

This comparative example is substantially the same as Comparative Example 1, except that a lithium manganese iron phosphate material Li_{1.04}Mn_{0.55}Fe_{0.35}V_{0.1}PO₄@C is provided. The carbon content in the positive electrode material is 1.4%. In this comparative example, magnesium oxide is changed to vanadium oxide. Apart from these differences, the other parameters and steps remain unchanged.

### Comparative Example 7

This comparative example is substantially the same as Example 1, except that a lithium manganese iron phosphate material Li_{1.04}Mn_{0.55}Fe_{0.35}Mg_{0.11}PO₄@C is provided, and the carbon content in the positive electrode material is 1.4%.

In the preparation method of this comparative example, the molar ratio of manganese in manganese dioxide, iron in scrap iron, magnesium in magnesium oxide, and phosphorus in phosphoric acid is changed to 0.55:0.35:0.11:1.

### Comparative Example 8

This comparative example is substantially the same as Example 1, except that a lithium manganese iron phosphate material Li_{1.04}Mn_{0.55}Fe_{0.45}PO₄@C is provided, and the carbon content in the positive electrode material is 1.4%.

In step (1) of the preparation method of this comparative example, magnesium oxide is not added.

### Comparative Example 9

This comparative example is substantially the same as Example 1, except that a lithium manganese iron phosphate material Li_{1.04}Mn_{0.96}Fe_{0.1}Mg_{0.01}PO₄@C is provided, and the carbon content in the positive electrode material is 1.4%.

In step (1) of the preparation method of this comparative example, the molar ratio of manganese in manganese dioxide, iron in scrap iron, magnesium in magnesium oxide, and phosphorus in phosphoric acid is changed to 0.96:0.1:0.01:1.

### Comparative Example 10

This comparative example is substantially the same as Example 1, except that a lithium manganese iron phosphate material Li_{1.04}Mn_{0.1}Fe_{0.96}Mg_{0.01}PO₄@C is provided, and the carbon content in the positive electrode material is 1.4%.

In step (1) of the preparation method of this comparative example, the molar ratio of manganese in manganese dioxide, iron in scrap iron, magnesium in magnesium oxide, and phosphorus in phosphoric acid is changed to 0.1:0.96:0.01:1.

### Experimental Example

Lithium manganese iron phosphate materials prepared in the above Examples and Comparative Examples were fabricated into batteries and subjected to performance testing.

The preparation method of the lithium-ion batteries provided in the Examples and Comparative Examples was as follows:

Step (1): Preparation of negative electrode plate. Graphite as the negative electrode active material, acetylene black as the conductive agent, styrene-butadiene rubber as the binder, and sodium carboxymethyl cellulose as the thickener were mixed at a mass ratio of graphite:acetylene black:styrene-butadiene rubber:sodium carboxymethyl cellulose = 95:2:2:1. An appropriate amount of deionized water was added, and the mixture was stirred thoroughly to form a homogeneous negative electrode slurry. The slurry was then coated onto a negative electrode current collector (copper foil), followed by drying and cold pressing to obtain the negative electrode plate.

Step (2): Preparation of positive electrode plate. The corresponding positive electrode active material (i.e., the lithium manganese iron phosphate materials prepared in the Examples and Comparative Examples), acetylene black as the conductive agent, and polyvinylidene fluoride as the binder were mixed at a mass ratio of 96:2:2. N-methyl-2-pyrrolidone was used as the solvent, and the mixture was thoroughly ground and stirred to form a homogeneous positive electrode slurry. The slurry was then coated onto a positive electrode current collector (aluminum foil), followed by drying and cold pressing to obtain the positive electrode plate.

Step (3): Preparation of the battery. The positive electrode plate, a separator (a PE/PP porous polymer film), and the negative electrode plate were stacked in sequence, with the separator positioned between the positive and negative electrode plates to provide isolation, and then wound to obtain a jelly roll. The jelly roll was placed in an outer packaging foil, and a lithium-ion electrolyte composed of organic solvents such as ethylene carbonate (EC) / ethyl methyl carbonate (EMC) and LiPF6 was injected into the dried cell. The cell then underwent vacuum sealing, standing, formation, and grading processes to obtain the lithium-ion battery.

### Performance Test Method:

Using a battery testing cabinet equipped with a constant-temperature chamber, battery charge-discharge cycle tests were carried out at 25 °C under 1C-1C charge-discharge conditions to measure the 1C charge specific energy and 1C discharge specific energy of the batteries prepared from the lithium manganese iron phosphate materials of the above Examples and Comparative Examples.

At 25 °C under 1C-1C charge-discharge conditions, battery cycle life tests were conducted to determine the number of cycles achieved when the capacity of the above batteries decreased to 80% of the rated capacity, which is recorded as the 25 °C 1C-1C cycle number @80%. At 45 °C under 1C-1C charge-discharge conditions, battery cycle life tests were conducted to determine the number of cycles achieved when the capacity of the above batteries decreased to 80% of the rated capacity, which is recorded as the 45 °C 1C-1C cycle number @80%.

The results are shown in Table 1.

**Table 1**

| | 1C Charge Specific Energy | 1C Discharge Specific Energy | 25 °C 1C-1C Cycle Number @80% | 45°C 1C-1C Cycle Number @80% |
|---|---|---|---|---|
| Example 1 | 545 | 510 | 4600 | 2700 |
| Example 2 | 556 | 518 | 4300 | 2500 |
| Example 3 | 535 | 503 | 5000 | 3000 |
| Example 4 | 500 | 465 | 6000 | 3200 |
| Example 5 | 480 | 450 | 2000 | 2800 |
| Example 6 | 490 | 460 | 7000 | 4000 |
| Example 7 | 555 | 520 | 4000 | 1800 |
| Example 8 | 525 | 490 | 5800 | 3600 |
| Example 9 | 520 | 480 | 2500 | 1200 |
| Example 10 | 550 | 510 | 3300 | 2300 |
| Example 11 | 526 | 490 | 5500 | 3200 |
| Example 12 | 550 | 518 | 4100 | 1900 |
| Example 13 | 558 | 520 | 3800 | 2100 |
| Example 14 | 556 | 510 | 4000 | 1900 |
| Example 15 | 558 | 515 | 3900 | 2200 |
| Example 16 | 550 | 505 | 3800 | 1900 |
| Example 17 | 560 | 516 | 4500 | 2200 |
| Example 18 | 555 | 520 | 4200 | 2300 |
| Example 19 | 555 | 510 | 4000 | 2100 |
| Example 20 | 557 | 521 | 4100 | 2000 |
| Example 21 | 550 | 516 | 4200 | 2200 |
| Example 22 | 556 | 520 | 4300 | 2100 |
| Example 23 | 540 | 510 | 4600 | 2000 |
| Example 24 | 546 | 513 | 4000 | 2000 |
| Example 25 | 523 | 505 | 3900 | 1800 |
| Comparative Example 1 | 502 | 477 | 3000 | 1000 |
| Comparative Example 2 | 522 | 496 | 3500 | 1500 |
| Comparative Example 3 | 510 | 486 | 3600 | 1400 |
| Comparative Example 4 | 525 | 496 | 3500 | 1600 |
| Comparative Example 5 | 520 | 490 | 3500 | 1500 |
| Comparative Example 6 | 530 | 495 | 3600 | 1600 |
| Comparative Example 7 | 505 | 480 | 3500 | 1500 |
| Comparative Example 8 | 500 | 470 | 3000 | 2000 |
| Comparative Example 9 | 476 | 440 | 2000 | 1500 |
| Comparative Example 10 | 480 | 450 | 5000 | 2500 |

From the above table, it can be seen that:
Example 1 has charge-discharge specific energy and cycle number superior to those of Comparative Example 1; Example 18 has charge-discharge specific energy and cycle number superior to those of Comparative Example 2; Example 19 has charge-discharge specific energy and cycle number superior to those of Comparative Example 3; Example 20 has charge-discharge specific energy and cycle number superior to those of Comparative Example 4; Example 21 has charge-discharge specific energy and cycle number superior to those of Comparative Example 5; and Example 22 has charge-discharge specific energy and cycle number superior to those of Comparative Example 6. This indicates that, compared with the conventional pure solid-phase method, in the present application, by synthesizing the material using a liquid-solid phase method and preparing precursors at different stages in a graded manner, and by precisely regulating the structures of the respective precursors, the specific energy and cycle number of the positive electrode material can be significantly improved.

Compared with Comparative Example 8, Example 1 exhibits significantly higher charge-discharge specific energy and cycle number, indicating that, in the present application, doping the positive electrode material with metal elements is beneficial for improving the cycling performance and specific energy of the positive electrode material.

By comparing Comparative Example 7 with Example 1, Comparative Example 9 with Example 5, and Comparative Example 10 with Example 6, it can be seen that the respective Examples exhibit significantly higher charge-discharge specific energy and cycle number. This demonstrates that there exists a specific molar ratio range among the elements in the precursor, and when the molar ratios of the elements fall within this range, the resulting positive electrode material exhibits good cycling performance and specific energy. Further optimizing the molar ratios of the elements so that they fall within a preferred range is beneficial for further improving the cycling performance and specific energy of the positive electrode material. When the molar ratio of any one element falls outside the range, the cycling performance or specific energy of the material decreases.

In Examples 23 to 25, the batteries of Examples 23 and 24 exhibit higher charge-discharge specific energy and cycle number, indicating that regulating the carbon content in the precursor is beneficial for better regulating the performance of the positive electrode material. When the carbon content of the precursor exceeds the control range (carbon content less than or equal to 5%), the cycling performance or specific energy of the material decreases.

## Claims

1. A preparation method of a precursor, comprising the following steps:
providing a plurality of first raw material components, the plurality of first raw material components comprising an iron source, a manganese source, a phosphorus source, an M source, and hydrogen peroxide; mixing the plurality of first raw material components, and drying to obtain a first precursor, wherein the first precursor has a general formula of MnₓFe_{y}M_{z}PO₄·nH₂O;
wherein M represents a metal element, x is 0.10-0.95, y is 0.10-0.95, z is 0.01-0.10, a sum of x, y, and z is 0.95-1.06, and n is any integer from 0 to 10.

2. The preparation method according to claim 1, wherein a molar ratio of manganese in the manganese source, iron in the iron source, M in the M source, and phosphorus in the phosphorus source is (0.10-0.95):(0.10-0.95):(0.01-0.10):1.

3. The preparation method according to claim 1, wherein M comprises one or more selected from a group consisting of magnesium, calcium, strontium, cobalt, titanium, zirconium, molybdenum, vanadium, niobium, nickel, scandium, chromium, copper, zinc, beryllium, lanthanum, and aluminum; and/or
the iron source comprises one or more selected from a group consisting of iron powder, inorganic iron salts, and organic iron salts, wherein the inorganic iron salts comprise one or more selected from a group consisting of ferrous sulfate, iron phosphate, ferric hydrogen phosphate, and ferric dihydrogen phosphate, and the organic iron salts comprise one or more selected from a group consisting of ferric acetate, ferrous oxalate, ferrous tartrate, ferrous lactate, and ferrous formate; and/or
the manganese source comprises one or more selected from a group consisting of inorganic manganese salts and organic manganese salts, wherein the inorganic manganese salts comprise one or more selected from a group consisting of manganese sulfate, manganese carbonate, manganese nitrate, manganese phosphate, and manganese hydrogen phosphate, and the organic manganese salts comprise one or more of manganese acetate and manganese oxalate. and/or
the M source comprises one or more selected from a group consisting of organic M salts and inorganic M salts, wherein the organic M salts comprise one or more selected from a group consisting of formates of M, acetates of M, hydroxyacetates of M, lactates of M, tartrates of M, and oxalates of M, and the inorganic M salts comprise at least one selected from a group consisting of phosphates of M, hydrogen phosphates of M, dihydrogen phosphates of M, carbonates of M, oxides of M, hydroxides of M, fluorides of M, chlorides of M, nitrates of M, sulfates of M, and bromides of M; and/or
the phosphorus source comprises one or both of phosphoric acid and ammonium dihydrogen phosphate.

4. The preparation method according to claim 1, further comprising the following step: providing a calcination feed, the calcination feed comprising the first precursor; calcining the calcination feed to obtain a second precursor, wherein the second precursor comprises a core having a general formula of MnₓFe_{y}M_{z}PO₄.

5. The preparation method according to claim 4, wherein the second precursor further comprises a carbon layer coated on a surface of the core, and a mass percentage of the carbon layer based on a mass of the second precursor is less than or equal to 5%.

6. The preparation method according to claim 5, wherein the calcination feed further comprises a first carbon source, and the first carbon source comprises one or more selected from a group consisting of organic metal salts, organic carbon sources, and inorganic carbon sources; the organic metal salts comprise one or more selected from a group consisting of organic iron salts, organic manganese salts, and organic M sources, the organic carbon sources comprise one or more selected from a group consisting of glucose, sucrose, lactose, starch, organic acids, vitamins, polyvinylpyrrolidone, polyethylene glycol, 1-hydroxyethylidene-1,1-diphosphonic acid, aminotris(methylene phosphonic acid), diethylenetriaminepentaacetic acid, and phenolic resin, and the inorganic carbon sources comprise one or more selected from a group consisting of graphene, carbon nanotubes, and graphite.

7. The preparation method according to claim 5, wherein the calcination feed further comprises a first carbon source, and a mass percentage of carbon in the calcination feed, based on a total mass of the calcination feed, is 0 to 25%.

8. The preparation method according to any one of claims 4 to 7, further comprises the following steps: providing a plurality of second raw material components, the plurality of second raw material components comprising the second precursor, a lithium source, and a surfactant; mixing the plurality of second raw material components, and drying to obtain a third precursor, wherein the third precursor comprises an inner core and a carbon coating layer coated on an outer surface of the inner core, and the inner core comprises a material having a general formula of LiₐMnₓFe_{y}M_{z}PO₄, wherein a is 0.95-1.10.

9. The preparation method according to claim 8, wherein a molar ratio of lithium in the lithium source to iron in the iron source is (0.95-1.10):(0.10-0.95).

10. The preparation method according to claim 8, wherein in the third precursor, a mass percentage of the carbon coating layer based on a mass of the third precursor is 1%-5%.

11. The preparation method according to claim 8, wherein the plurality of second raw material components further comprise a second carbon source, and a mass percentage of carbon in the plurality of second raw material components, based on a total mass of the plurality of second raw material components, is 1%-25%.

12. The preparation method according to claim 8, wherein the plurality of second raw material components further comprise a second carbon source, and the second carbon source comprises one or more selected from a group consisting of organic metal salt, organic carbon sources, and inorganic carbon sources; the organic metal salts comprise one or more selected from a group consisting of organic iron salts, organic manganese salts, organic M sources, and organic lithium sources, the organic carbon sources comprise one or more selected from a group consisting of glucose, sucrose, lactose, starch, organic acids, vitamins, polyvinylpyrrolidone, polyethylene glycol, 1-hydroxyethylidene-1,1-diphosphonic acid, aminotris(methylene phosphonic acid), diethylenetriaminepentaacetic acid, and phenolic resin, and the inorganic carbon sources comprise one or more selected from a group consisting of graphene, carbon nanotubes, and graphite; and/or
the lithium source comprise one or more selected from a group consisting of lithium oxides, lithium hydroxide, organic lithium salts, and inorganic lithium salts, wherein the lithium oxides comprise Li₂O, the inorganic lithium salts comprise one or more selected from a group consisting of lithium carbonate, lithium sulfate, lithium nitrate, lithium dihydrogen phosphate, and lithium phosphate, and the organic lithium salts comprise one or both of lithium acetate and lithium oxalate.

13. A precursor, comprising any one of a first precursor, a second precursor, and a third precursor;
wherein the first precursor has a general formula of MnₓFe_{y}M_{z}PO₄·nH₂O;
the second precursor comprises a core having a general formula of MnₓFe_{y}M_{z}PO₄; and
the third precursor comprises an inner core and a carbon coating layer coated on an outer surface of the inner core, and the inner core comprises a material having a general formula of LiₐMnₓFe_{y}M_{z}PO₄;
wherein M represents a metal element, x is 0.10-0.95, y is 0.10-0.95, z is 0.01-0.10, a sum of x, y, and z is 0.95-1.06, and n is any integer from 0 to 10.

14. The precursor according to claim 13, wherein M comprises one or more selected from a group consisting of magnesium, calcium, strontium, cobalt, titanium, zirconium, molybdenum, vanadium, niobium, nickel, scandium, chromium, copper, zinc, beryllium, lanthanum, and aluminum.

15. The precursor according to claim 13, wherein the second precursor further comprises a carbon layer coated on a surface of the core, and a mass percentage of the carbon layer based on a mass of the second precursor is less than or equal to 5%.

16. The precursor according to claim 13, wherein in the third precursor, a mass percentage of the carbon coating layer based on a mass of the third precursor is 1%-5%. and/or
x is 0.40-0.70; and/or
y is 0.30-0.60; and/or
z is 0.05-0.10; and/or
a sum of x, y, and z is 0.96-0.99.

17. A positive electrode material, prepared from a precursor, wherein the precursor comprises the precursor prepared by the preparation method as claimed in any one of claims 1 to 12, or the precursor as claimed in any one of claims 13 to 16.

18. The positive electrode material according to claim 17, comprising an inner core and a carbon coating layer coated on an outer surface of the inner core, wherein the inner core has the following general formula: LiₐMnₓFe_{y}M_{z}PO₄;
wherein M represents a metal element, a is 0.95-1.10, x is 0.10-0.95, y is 0.10-0.95, z is 0.01-0.10, a sum of x, y, and z is 0.95-1.06; a mass percentage of the carbon coating layer in the positive electrode material is 1%-2%.

19. A positive electrode plate, comprising a positive electrode current collector and a coating layer disposed on a side of the positive electrode current collector, wherein a material of the coating layer comprises the positive electrode material as claimed in claim 17 or 18.

20. A lithium-ion battery, comprising the positive electrode plate as claimed in claim 19.
